# EUROPÄISCHE PATENTSCHRIFT

(11) **EP 3 488 113 B1**
(45) Veröffentlichungstag und Bekanntmachung des Hinweises auf die Patenterteilung: **15.01.2025**
(21) Anmeldenummer: 17737476.6
(22) Anmeldetag: 29.06.2017
(51) Int. Cl.: F15B 15/14, B23Q 3/08, F16L 37/62

(54) **SPANNZYLINDERVORRICHTUNG**
TENSIONING CYLINDER DEVICE
DISPOSITIF CYLINDRE DE SERRAGE

(30) Priorität: 20.07.2016 DE 102016008882
(43) Veröffentlichungstag der Anmeldung: 29.05.2019
(73) Patentinhaber: Hydac Technology GmbH, 66280 Sulzbach (DE)
(72) Erfinder: KLOFT, Peter, 56235 Ransbach-Baumbach (DE); BALTES, Herbert, 66679 Losheim (DE)
(74) Vertreter: Bartels und Partner, Patentanwälte
(86) Internationale Anmeldenummer: PCT/EP2017/000775
(87) Internationale Veröffentlichungsnummer: WO 2018/014996

(56) Entgegenhaltungen:
- DE-A1- 10 310 930
- JP-A- 2001 248 760
- JP-A- H02 192 829
- JP-A- H1 019 001
- US-A- 2 533 413

## Beschreibung

Die Erfindung betrifft eine Spannzylindervorrichtung mit den Merkmalen im Oberbegriff von Anspruch 1. Ferner bezieht sich die Erfindung auf eine Spannzange, insbesondere zum Festlegen von zwei Flanschhälften aneinander.

Spannzylindervorrichtungen, die eine längsverfahrbare Kolben-Stangen-Einheit für die Erzeugung einer Betätigungskraft aufweisen, sind Stand der Technik. Solche Zylindervorrichtungen werden vielfach als Haltezylinder oder auch als Stellzylinder, beispielsweise in Kraftwerken, eingesetzt. Insbesondere bei Anwendungen als Haltezylinder muss sichergestellt sein, dass die erzeugte Klemmkraft auch über einen langen Zeitraum hinweg nicht abnimmt. Diese Forderung muss vor allem bei Off-Shore-Einsätzen von Spannzylindervorrichtungen erfüllt sein. Hierbei werden Spannzylindervorrichtungen dazu benutzt, Flanschhälften mit vorgegebener Kraft beispielsweise an Unterwassergehäusen oder Rohrleitungen oder dergleichen zusammenzuhalten. Am Umfang von Flanschen sind bei solchen Systemen häufig mehrere Spannzylindervorrichtungen angeordnet.

So ist in der DE 10 2011 009 276 A1 bereits eine Vorrichtung zum Übertragen eines hydraulischen Arbeitsdruckes in einer Druckflüssigkeit zur Druckbetätigung hydraulischer Einrichtungen von Tiefseeanlagen vorgeschlagen worden, wobei in einer Zylinderanordnung ein erster Druckraum für die Druckflüssigkeit, eine zur Veränderung des Volumens dieses Druckraums bewegbare Kolbenanordnung sowie zumindest ein zweiter Druckraum vorhanden ist, der für eine den Arbeitsdruck im ersten Druckraum erzeugende Bewegung der Kolbenanordnung mit dem Umgebungsdruck der Tiefsee beaufschlagbar ist Bei dieser bekannten Lösung wird der Arbeitsdruck in der Zylinderanordnung nicht mittels des auf die Kolbenanordnung unmittelbar einwirkenden Seewassers erzeugt oder übertragen, sondern der Zylinderanordnung ist ein Druckspeicher vorgeschaltet, aus dem der Zylinderanordnung ein Betätigungsfluid, das unter dem Tiefseedruck steht, zuführbar ist, um dergestalt den benötigten Arbeitsdruck zu erzeugen.

Die JP H02-192829 A beschreibt eine Spannzylindervorrichtung mit den Merkmalen im Oberbegriff von Anspruch 1 mit einem Gehäuse und einer darin zumindest teilweise längsverfahrbar angeordneten Kolben-Stangen-Einheit und mit einem Ausgleichselement in Form eines Balgfalten aufweisenden Balgkörpers, der längenveränderbar ist und in medienführender Verbindung mit einem in einem Medienraum im Gehäuse aufgenommenen kompressiblen Medium steht, wobei der Balgkörper im Gehäuse zwischen einer an diesem befindlichen Festlegestelle und einer bewegbaren Führungsplatte eingespannt ist, die einen zweiten Medienraum mit inkompressiblem Medium von dem Medienraum mit dem kompressiblen Medium trennt.

Weitere Spannzylindervorrichtungen gehen aus der DE 103 10 930 A1, der JP 2001-248760 A, der US 2 533 413 A hervor.

Ausgehend von diesem Stand der Technik stellt sich die Erfindung die Aufgabe, eine Spannzylindervorrichtung zur Verfügung zu stellen, mittels deren über lange Betriebszeiträume hinweg die sichere Erzeugung einer bleibenden Betätigungskraft ermöglicht ist.

Erfindungsgemäß ist diese Aufgabe durch eine Spannzylindervorrichtung gelöst, die die Merkmale des Patentanspruchs 1 in seiner Gesamtheit aufweist.

Gemäß dem Kennzeichen von Anspruch 1 ist vorgesehen, dass die Kolben-Stangen-Einheit innerhalb des Gehäuses den zweiten Medienraum mit dem inkompressiblen Medium von einem weiteren, dritten Medienraum mit einem gleichfalls inkompressiblen Medium mediendicht trennt, dass das Gehäuse ein kreiszylinderförmiges Gehäuse ist, das zur Bildung eines Topfes durch einen Boden geschlossen ist, und dass als Gehäuseabschluss an dem entgegengesetzten Ende des Gehäuses ein Verschlusskopf vorgesehen ist.

Dadurch, dass im Gehäuse ein Medienraum mit einem kompressiblen Medium, beispielsweise einem Arbeitsgas, wie N₂, vorgesehen ist, der mit einem längenveränderbaren Balgkörper in Verbindung ist, steht als Energiespeicher ein Druckgasvolumen zur Verfügung. Da dieses mit einem längenveränderbaren Balgkörper, vorzugsweise in Form eines Metallbalges, abgeschlossen und dadurch hermetisch eingeschlossen ist, ist die Betriebssicherheit über lange Zeiträume hinweg gewährleistet. Die erfindungsgemäße Spannzylindervorrichtung eignet sich daher in besonderem Maße für einen Unterwassereinsatz. Da der längenveränderbare Balgkörper als ein Übertragungselement für die vom Energiespeicher erzeugte Betätigungskraft auf die Kolben-Stangen-Einheit dienen kann, zeichnet sich die erfindungsgemäße Spannzylindervorrichtung auch durch eine einfache, kompakte und funktionssichere Bauweise aus.

Der Balgkörper ist im Gehäuse zwischen einer an diesem befindlichen Festlegestelle und einer bewegbaren Führungsplatte eingespannt, die einen zweiten Medienraum mit inkompressiblem Medium von dem Medienraum mit dem kompressiblen Medium trennt. Die Führungsplatte kann als Endverschlussplatte des Balgkörpers mit der angrenzenden letzten Balgfalte verschweißt sein. Es kann aber auch ein zumindest nach einer Seite hin abgeschlossener, handelsüblicher Metallbalg Verwendung finden.

In vorteilhafter Weise kann der Balgkörper derart dimensioniert sein, dass die Außenseite seiner Balgfalten entlang der Innenseite des zylindrischen Gehäuses geführt ist, was die Knickstabilität erhöht.

Die Kolben-Stangen-Einheit trennt innerhalb des Gehäuses den zweiten Medienraum mit dem inkompressiblen Medium von einem weiteren, dritten Medienraum mit einem gleichfalls inkompressiblen Medium. Dergestalt ist eine kompakt aufbauende, handelbare Baueinheit geschaffen.

Bei dieser Anordnung ist der jeweils herrschende Druck in dem ersten Medienraum mit dem kompressiblen Medium über die Führungsplatte des Balgkörpers und über den zweiten Medienraum mit dem inkompressiblen Medium an der Kolben-Stangen-Einheit wirksam. Bei dem inkompressiblen Medium, das im zweiten Medienraum den Zwischenübertrager für zwischen Führungsplatte und Kolben-Stangen-Einheit wirkenden Betätigungskräften bildet, kann es sich um ein hochviskoses Öl handeln, durch dessen Zähigkeit eine Art Dämpfungspolster zwischen Führungsplatte und angrenzender Stirnseite der Kolben-Stangen-Einheit gebildet ist.

Der weitere, dritte Medienraum kann mit einem Steueranschluss versehen sein, der, mit Fluiddruck beaufschlagt, der größer ist als der Druck des kompressiblen Mediums, das Einfahren der Kolben-Stangen-Einheit in Richtung der Führungsplatte erlaubt.

Die Druckversorgung mittels des Steueranschlusses kann derart gestaltet sein, dass in voll ausgefahrenem Zustand der Kolben-Stangen-Einheit sich eine stirnseitige Kolbenfläche an einem Restvolumen von inkompressiblem Medium im dritten Medienraum abstützt. Beim voll ausgefahrenen Zustand befindet sich daher auch zwischen dieser Stirnseite des Kolbens und der zugewandten, den dritten Medienraum begrenzenden Wand des Gehäuses ein dämpfendes Fluidpolster, das den unmittelbaren metallischen Flächenkontakt verhindern hilft.

Bei vorteilhaften Ausführungsbeispielen weist die Stange der Kolben-Stangen-Einheit eine nach außen hin verschließbare Durchgangsöffnung auf, die in den zweiten Medienraum ausmündet und die der Aufnahme des inkompressiblen Mediums dient, bei dem es sich, wie oben erwähnt, vorzugsweise um ein hochviskoses Öl handelt.

Der Verschlusskopf kann den Steueranschluss aufweisen. Die Stange der Kolben-Stangen-Einheit kann sich durch eine zentrale Bohrung im Verschlusskopf hindurch nach außen erstrecken, wobei innerhalb der Bohrung befindliche Dichtelemente die Abdichtung des sich an der Stangenseite des Kolbens befindlichen dritten Medienraums bilden.

Die Festlegestelle für den Balgkörper kann in vorteilhafter Weise aus einem Festlegering gebildet sein, der stationär in eine Ausnehmung in der Innenwandung des Gehäuses eingreift.

Gegenstand der Erfindung ist gemäß dem Patentanspruch 11 auch eine Spannzange, insbesondere zum Festlegen von zwei Flanschhälften aneinander mit vorgebbarer Spannkraft, die auch über einen langen Einsatzzeitraum beibehalten ist, mit zwei Spannbacken, die insbesondere einen Spannraum für die Aufnahme der beiden Flanschhälften begrenzen, wobei die eine Spannbacke auf die andere Spannbacke zu- und wegbewegbar ist und wobei die Spannzange dadurch gekennzeichnet ist, dass zumindest die eine Spannbacke mittels einer Spannzylindervorrichtung nach einem der Patentansprüche 1 bis 10 bewegbar ist.

Nachstehend ist die Erfindung anhand der Zeichnung im Einzelnen erläutert. Es zeigen:
- Fig. 1: in gegenüber einer praktischen Ausführungsform etwa 6½-fach verkleinerter Darstellung einen Längsschnitt eines Ausführungsbeispiels der erfindungsgemäßen Spannzylindervorrichtung, wobei der Spannzustand dargestellt ist;
- Fig. 2: einen gegenüber Fig. 1 um 90° gedreht gezeichneten Längsschnitt des Ausführungsbeispiels, wobei der Lösezustand dargestellt ist; und
- Fig. 3: einen stark schematisch gezeichneten Längsschnitt einer mittels der erfindungsgemäßen Spannzylindervorrichtung betätigbaren Spannzange.

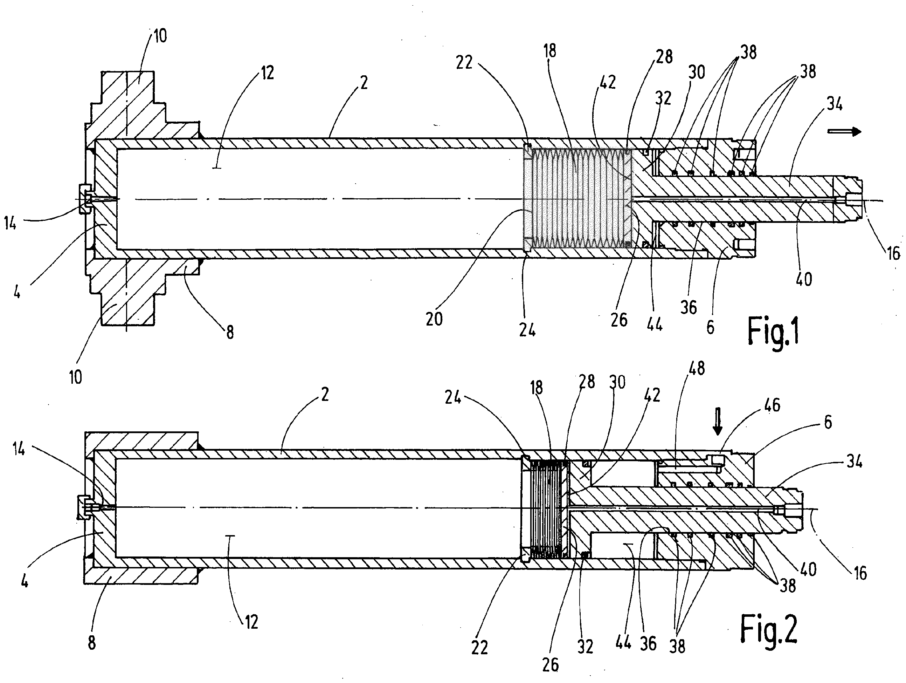

Das dargestellte Ausführungsbeispiel der Spannzylindervorrichtung weist ein kreiszylinderförmiges Gehäuse 2 auf, das zur Bildung eines Topfes an dem in Fig. 1 und 2 links gelegenen Ende durch einen Boden 4 geschlossen ist. Als Gehäuseabschluss an dem hierzu entgegengesetzten Ende des Gehäuses 2 ist ein eingeschraubter Verschlusskopf 6 vorgesehen. Als Halterung für den Einbau in ein betreffendes System ist das Gehäuse 2 im Bereich des Bodens 4 mit einem Haltekörper 8 verschweißt, der auf zwei einander gegenüberliegenden Seiten auskragende Befestigungsteile 10 aufweist.

Der an den Boden 4 angrenzende Teil des Gehäuses 2 dient als erster Medienraum 12, der über einen Füllanschluss 14, der am Boden 4 koaxial zur Gehäuselängsachse 16 angeordnet ist, mit einem unter hohem Druck, beispielsweise 250 bis 300 bar, stehenden Arbeitsgas, wie N₂ befüllbar ist. Der dem Boden 4 gegenüberliegende Abschluss des Medienraums 12 ist durch einen Balgkörper 18 gebildet, der als metallischer Faltenbalg ausgebildet ist und mit der Außenseite seiner Balgfalten längsveränderbar an der Innenwand des Gehäuses 2 geführt ist. Der Balgkörper 18 ist mit seinem dem Boden 4 zugewandten offenen Ende an einer Festlegestelle des Gehäuses 2 festgelegt. Diese ist beim gezeigten Beispiel durch einen Festlegering 22 gebildet, an dem die letzte Balgfalte des Balgkörpers 18 angeschweißt, oder aber nur angelegt ist und der, in der Art eines Sprengringes, in einer vertieften Ausnehmung 24 in der Innenwand des Gehäuses 2 sitzt. An dem anderen Ende ist der Balgkörper 18 durch eine mit der anliegenden letzten Balgfalte verschweißte, oder aber auch nur angelegte Führungsplatte 26 geschlossen, die im Gehäuse 2 längsverfahrbar und an der Gehäuseinnenwand durch eine Führung 28 geführt wird.

Wie die Fig. 1 und 2 zeigen, ist der Festlegering 22 an der Innenwand des Gehäuses 2 in einer Position festgelegt, bei der die Länge des das Druckgas enthaltenden ersten Medienraums 12 wesentlich größer ist als die im Gehäuse 2 von der Festlegestelle am Festlegering 22 bis zum äußeren Ende des Verschlusskopfes 6 verbleibende Restlänge des Gehäuses 2. Bei dem in Fig. 1 und 2 gezeigten Beispiel ist der Festlegering 22 an einer Position angeordnet, bei der der Abstand vom Boden 4 etwa das 1,6-fache des Abstands vom äußeren Ende des Verschlusskopfes 6 beträgt. In dem Gehäuseabschnitt zwischen der Führungsplatte 26 und dem Verschlusskopf 6 ist eine Kolben-Stangen-Einheit angeordnet, deren Kolben 30 im Gehäuse 2 längsverfahrbar und mittels einer Kolbendichtung 32 abgedichtet ist. Von der dem Verschlusskopf 6 zugewandten Seite des Kolbens 30 erstreckt sich die Stange 34 der Kolben-Stangen-Einheit durch eine im Verschlusskopf 6 koaxial zur Zylinderachse 16 ausgebildete Durchgangsbohrung 36 nach außen, wobei Dichtelemente 38 die Abdichtung zwischen Stange 34 und Verschlusskopf 6 bilden.

Die Stange 34 weist einen zur Achse 16 koaxialen Kanal 40 auf, der sich von der der Führungsplatte 26 zugewandten ebenen Kolbenseite des Kolbens 30 bis zum äußeren freien Ende der Stange 34 erstreckt. Über den Kanal 40 ist ein hochviskoses Öl als inkompressibles Medium in einen zweiten Medienraum 42 einfüllbar, der sich zwischen der ebenen Kolbenseite des Kolbens 30 und der Führungsplatte 26 befindet. Der Ringraum, der die Stangenseite des Kolbens 30 umgibt und sich bis zum zugewandten Ende des Verschlusskopfes 6 erstreckt, bildet einen dritten Medienraum 44 für ein inkompressibles Medium. Das diesem dritten Medienraum 44 über einen Steueranschluss 46 (Fig. 2) des Verschlusskopfes 6 und über einen Steuerkanal 48 zuführbare inkompressible Medium, wie Hydrauliköl, bildet das Steuermedium für einen Lösevorgang der Spannzylindervorrichtung.

Die Fig. 1 zeigt den Spannzustand der Vorrichtung, bei dem im dritten Medienraum 44 kein wirksamer Steuerdruck herrscht, der dem im ersten Medienraum 12 herrschenden Gasdruck entgegenwirken würde. Der Druck des als Energiespeicher dienenden ersten Medienraums 12 hat daher den Balgkörper 18 ausgezogen, wobei die Führungsplatte 26 den Kolben 30 mit Verschiebekraft beaufschlagt, so dass die Stangenseite des Kolbens 30 sich gegen den Verschlusskopf 6 bewegt hat und die Stange 34 in die Spannstellung ausgefahren ist. Dabei wirkt das zähe Öl im spaltartigen zweiten Medienraum 42 zwischen Führungsplatte 26 und Kolben 30 als den metallischen Kontakt dämpfendes Polster. Ein im dritten Medienraum 44 trotz fehlenden Steuerdrucks verbliebenes Restvolumen von als Steuermedium dienendem Hydrauliköl wirkt auch im dritten Medienraum 44 wiederum als dämpfendes Polster gegen direkten mechanischen Kontakt zwischen der Rückseite des Kolbens 30 und dem Verschlusskopf 6.

Die Fig. 2 zeigt den Lösezustand bei über den Steueranschluss 46 zugeführtem Steuerdruck. Bei der kleineren stangenseitigen druckwirksamen Kolbenfläche im Medienraum 44 erfolgt die Zufuhr des Steuerdrucks mit einem gegenüber dem im ersten Medienraum 12 herrschenden Arbeitsgasdruck weit höherem Druckniveau, beispielsweise mit einem Löse-Öldruck von 700 bar, bei einem im Energiespeicher (Medienraum 12) herrschenden Gasdruck von 250 bis 300 bar.

Das über den Kanal 40 in den Medienraum 42 eingebrachte hohviskose Öl, das die Kraftkopplung zwischen Balg-Führungsplatte 26 und Boden des Kolbens 30 herstellt, kann vorzugsweise mit einer entsprechend größeren Einfüllmenge bereitgestellt sein, um mögliche Verluste über das jeweilige Dichtsystem zu kompensieren. Des Weiteren kann der Druck am Druckanschluss 46 permanent durch einen Drucksensor (nicht dargestellt) überwacht sein. Bei Erkennen eines Druckanstiegs im Medienraum 44 beim Spannzustand der Vorrichtung, also bei Fehlen des Steuerdrucks im Medienraum 44, kann eine Undichtigkeit am Kolben 30 festgestellt werden, so dass eine geplante Wartung mit Erneuerung von Dichtelementen durchgeführt werden kann. Bei dem Stand der Technik entsprechenden Spannvorrichtungen, die mit Federkraft arbeiten, ist eine derartige Überwachung nicht möglich.

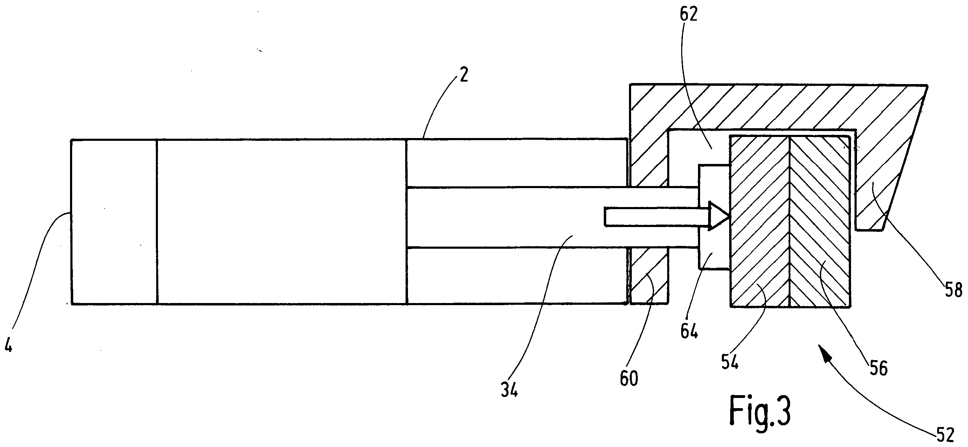

Die Fig. 3 zeigt in vereinfachter schematischer Darstellung eine Spannzange 52 zum Festlegen von schematisierten gezeichneten Flanschhälften 54 und 56 zwischen zwei Spannbacken 58 und 60, die einen Spannraum 62 für die Aufnahme der Flanschhälften 54, 56 begrenzen. Dabei bildet die Kolbenstange 34 der erfindungsgemäßen Spannzylindervorrichtung ein bewegbares Teil der Spannbacke 60 in Form eines Druckstücks 64, das bei Betätigung mittels des in Fig. 1 und 2 gezeigten Beispiels der Spannzylindervorrichtung mit einem Spannhub von 100 mm bewegbar ist. Die gezeigten Flanschhälften 54, 56 werden im festgelegten Zustand aneinander mittels der Spannbacken 58 und 60 der Spannzangen 52 ausschließlich über den Gasdruck im ersten Medienraum 12 gehalten. Da der Metallbalg 18 mediendicht ausgeführt ist und gemäß der Darstellung nach der zugehörigen Fig. 1 die über die Dichtung 28 abgedichtete Führungsplatte 26 gegen das unter hohem Druck stehende Ölvolumen der Medienkammer 42 gedrückt wird, das gleichfalls eine Art Dichtung bildet, sind Gasverluste vermieden und eine lang andauernde kraftschlüssige Verbindung erreicht.

## Patentansprüche

1. Spannzylindervorrichtung, mit einem Gehäuse (2) und einer darin zumindest teilweise längsverfahrbar angeordneten Kolben-Stangen-Einheit (30, 34) und mit einem Ausgleichselement in Form eines Balgfalten aufweisenden Balgkörpers (18), der längenveränderbar ist und
in medienführender Verbindung mit einem in einem Medienraum (12) im Gehäuse (2) aufgenommenen kompressiblen Medium steht,
wobei der Balgkörper (18) im Gehäuse (2) zwischen einer an diesem befindlichen Festlegestelle (22) und einer bewegbaren Führungsplatte (26) eingespannt ist, die einen zweiten Medienraum (42) mit inkompressiblem Medium von dem Medienraum (12) mit dem kompressiblen Medium trennt,
**dadurch gekennzeichnet,**
**dass** die Kolben-Stangen-Einheit (30, 34) innerhalb des Gehäuses (2) den zweiten Medienraum (42) mit dem inkompressiblen Medium von einem weiteren, dritten Medienraum (44) mit einem gleichfalls inkompressiblen Medium mediendicht trennt,
**dass** das Gehäuse (2) ein kreiszylinderförmiges Gehäuse (2) ist, das zur Bildung eines Topfes durch einen Boden (4) geschlossen ist, und
**dass** als Gehäuseabschluss an dem entgegengesetzten Ende des Gehäuses (2) ein Verschlusskopf (6) vorgesehen ist.

2. Spannzylindervorrichtung nach Anspruch 1, **dadurch gekennzeichnet, dass** die Außenseite der Balgfalten des Balgkörpers (18) entlang der Innenseite des zylindrischen Gehäuses (2) geführt ist.

3. Spannzylindervorrichtung nach Anspruch 1 oder 2, **dadurch gekennzeichnet, dass** der jeweils herrschende Druck in dem Medienraum (12) mit dem kompressiblen Medium über die Führungsplatte (26) des Balgkörpers (18) und über den zweiten Medienraum (42) mit dem inkompressiblen Medium auf die Kolben-Stangen-Einheit (30, 34) übertragen ist.

4. Spannzylindervorrichtung nach einem der vorstehenden Ansprüche, **dadurch gekennzeichnet, dass** der weitere, dritte Medienraum (44) mit einem Steueranschluss (46) versehen ist, der, mit Fluiddruck beaufschlagt, der größer ist als der Druck des kompressiblen Mediums, das Einfahren der Kolben-Stangen-Einheit (30, 34) in Richtung der Führungsplatte (26) erlaubt.

5. Spannzylindervorrichtung nach einem der vorstehenden Ansprüche, **dadurch gekennzeichnet, dass** im voll ausgefahrenen Zustand der Kolben-Stangen-Einheit (30, 34) sich eine stirnseitige Kolbenfläche an einem Restvolumen von inkompressiblem Medium im dritten Medienraum (44) abstützt.

6. Spannzylindervorrichtung nach einem der vorstehenden Ansprüche, **dadurch gekennzeichnet, dass** die Stange (34) der Kolben-Stangen-Einheit (30, 34) eine nach außen hin verschließbare Durchgangsöffnung (40) aufweist, die in den zweiten Medienraum (42) ausmündet und die der Aufnahme des inkompressiblen Mediums dient.

7. Spannzylindervorrichtung nach Anspruch 4, oder nach Anspruch 5 oder 6, wenn von Anspruch 4 abhängig, **dadurch gekennzeichnet, dass** der Verschlusskopf (6) den Steueranschluss (46) aufweist.

8. Spannzylindervorrichtung nach einem der vorstehenden Ansprüche, **dadurch gekennzeichnet, dass** die Festlegestelle für den Balgkörper (18) aus einem Festlegering (22) gebildet ist, der stationär in eine Ausnehmung (24) in der Innenwandung des Gehäuses (2) eingreift.

9. Spannzange, insbesondere zum Festlegen von zwei Flanschhälften aneinander mit vorgebbarer Spannkraft, die auch über einen langen Einsatzzeitraum beibehalten ist, mit zwei Spannbacken (58, 60, 64), die insbesondere einen Spannraum (62) für die Aufnahme der beiden Flanschhälften (54, 56) begrenzen, wobei die eine Spannbacke (60, 64) auf die andere Spannbacke (58) zu- und wegbewegbar ist, **dadurch gekennzeichnet, dass** zumindest die eine Spannbacke (60, 64) mittels einer Spannzylindervorrichtung (2, 34) nach einem der vorhergehenden Ansprüche bewegbar ist.

## Claims

1. Clamping cylinder device, with a housing (2) and a piston-rod unit (30, 34) arranged so as to be at least partially longitudinally displaceable therein and with a compensating element in the form of a bellows body (18) having bellows folds, which bellows body can be varied in length and is in media-conducting communication with a compressible medium accommodated in a media chamber (12) in the housing (2),
wherein the bellows body (18) is clamped in the housing (2) between a fixing point (22) located thereon and a movable guide plate (26), which separates a second media chamber (42) with incompressible medium from the media chamber (12) with the compressible medium,
**characterised in that**
within the housing (2), the piston-rod unit (30, 34) separates the second media chamber (42) with the incompressible medium from a further, third media chamber (44) with a likewise incompressible medium in a media-tight manner,
**in that** the housing (2) is a circular cylindrical housing (2) which is closed by a base (4) to form a pot, and
**in that** a closure head (6) is provided at the opposite end of the housing (2) as the housing closure.

2. Clamping cylinder device according to claim 1, **characterised in that** the outer side of the bellows folds of the bellows body (18) is guided along the inner side of the cylindrical housing (2).

3. Clamping cylinder device according to claim 1 or 2, **characterised in that** the respectively prevailing pressure in the media chamber (12) with the compressible medium is transmitted via the guide plate (26) of the bellows body (18) and via the second media chamber (42) with the incompressible medium to the piston-rod unit (30, 34).

4. Clamping cylinder device according to one of the preceding claims, **characterised in that** the further, third media chamber (44) is provided with a control connection (46) which, when acted upon by fluid pressure that is greater than the pressure of the compressible medium, allows the piston-rod unit (30, 34) to be retracted in the direction of the guide plate (26),

5. Clamping cylinder device according to one of the preceding claims, **characterised in that**, in the fully extended state of the piston-rod unit (30, 34), an end-face piston surface bears against a residual volume of incompressible medium in the third media chamber (44).

6. Clamping cylinder device according to one of the preceding claims, **characterised in that** the rod (34) of the piston-rod unit (30, 34) has a through-hole (40), which can be closed to the outside, which opens into the second media chamber (42) and which is used to receive the incompressible medium.

7. Clamping cylinder device according to claim 4, or according to claim 5 or 6, if dependent on claim 4, **characterised in that** the closure head (6) comprises the control connection (46).

8. Clamping cylinder device according to one of the preceding claims, **characterised in that** the fixing point for the bellows body (18) is formed from a retaining ring (22) which engages stationarily in a recess (24) in the inner wall of the housing (2).

9. Collet, in particular for fixing two flange halves to each other with a predefinable clamping force which is also maintained over a longer period of use, having two clamping jaws (58, 60, 64), which in particular define a clamping space (62) for receiving the two flange halves (54, 56), wherein the one clamping jaw (60, 64) can be moved towards and away from the other clamping jaw (58), **characterised in that** at least the one clamping jaw (60, 64) is movable by means of a clamping cylinder device (2, 34) according to one of the preceding claims.

## Revendications

1. Dispositif cylindre de serrage, comprenant une enveloppe (2) et une unité (30, 34) piston-tige, qui y est montée avec possibilité de se déplacer longitudinalement au moins en partie et comprenant un élément de compensation sous la forme d'un corps (18) de soufflet ayant des plis de soufflet, qui peut être modifié en longueur et qui est en communication conduisant des fluides avec un fluide compressible reçu dans un espace (12) pour des fluides dans l'enveloppe (2),
dans lequel le corps (18) de soufflet est serré dans l'enveloppe (2) entre un point (22) de fixation s'y trouvant et un plateau (26) mobile de guidage, qui sépare un deuxième espace (42) pour des fluides ayant un fluide incompressible de l'espace (12) pour des fluides ayant le fluide compressible,
**caractérisé**
**en ce que** l'unité (30, 34) piston-tige sépare d'une manière étanche aux milieux à l'intérieur de l'enveloppe (2) le deuxième espace (42) pour des fluides ayant le fluide incompressible d'un autre troisième espace (44) pour des fluides ayant un fluide également incompressible, en ce que l'enveloppe (2) est une enveloppe (2) en forme de cylindre de section droite circulaire, qui, pour la formation d'un pot, est fermée par un fond (4),
et
**en ce qu'**il est prévu, comme fermeture de l'enveloppe, une tête (6) de fermeture à l'extrémité opposée de l'enveloppe (2) .

2. Dispositif cylindre de serrage suivant la revendication 1, **caractérisé en ce que** le côté extérieur des plis de soufflet du corps (18) de soufflet est guidé le long de la face intérieure de l'enveloppe (2) cylindrique.

3. Dispositif cylindre de serrage suivant la revendication 1 ou 2, **caractérisé en ce que** la pression régnant respectivement dans l'espace (12) pour des fluides ayant le fluide incompressible est transmise à l'unité (30, 34) de piston-tige en passant par le plateau (26) de guidage du corps (18) de soufflet et en passant par le deuxième espace (42) pour des milieux ayant le fluide incompressible.

4. Dispositif cylindre de serrage suivant l'une des revendications précédentes, **caractérisé en ce que** l'autre troisième espace (44) pour des fluides est pourvu d'un raccord (46) de commande, qui, alimenté en une pression de fluide, qui est plus grande que la pression du fluide incompressible, permet de faire entrer l'unité (30, 34) de piston-tige dans la direction du plateau (26) de guidage.

5. Dispositif cylindre de serrage suivant l'une des revendications précédentes, **caractérisé en ce que**, dans l'état complètement déployé de l'unité (30, 34) de piston-tige, une surface du côté frontal du piston s'appuie sur un volume résiduel du fluide incompressible dans le troisième espace (44) pour des fluides.

6. Dispositif cylindre de serrage suivant l'une des revendications précédentes, **caractérisé en ce que**, la tige (34) de l'unité (30, 34) de piston-tige a une ouverture (40) de passage, qui peut se fermer vers l'extérieur, qui débouche dans le deuxième espace (42) pour des fluides et qui sert à la réception du fluide incompressible.

7. Dispositif cylindre de serrage suivant la revendication 4 ou suivant la revendication 5 ou 6, lorsqu'elles dépendent de la revendication 4,
**caractérisé en ce que** la tête (6) de fermeture a le raccord (46) de commande.

8. Dispositif cylindre de serrage suivant l'une des revendications précédentes, **caractérisé en ce que** le point de fixation du corps (18) de soufflet est formé d'un anneau (22) de fixation, qui pénètre de manière fixe dans un évidement (24) de la paroi intérieure de l'enveloppe (2) .

9. Pince de serrage, en particulier pour la fixation de deux moitiés de bride l'une à l'autre avec une force de serrage pouvant être donnée à l'avance, qui ne change pas même sur un long laps de temps d'utilisation, comprenant deux mâchoires (58, 60, 64) de serrage, qui délimitent en particulier un espace (62) de serrage pour la réception des deux moitiés (54, 56) de bride, dans lequel l'une des mâchoires (60, 64) de serrage peut s'éloigner et se rapprocher de l'autre mâchoire (58) de serrage, **caractérisée en ce qu'**au moins la une mâchoire (60, 64) de serrage peut être déplacée au moyen d'un dispositif (2, 34) cylindre de serrage suivant l'une des revendications précédentes.
